(19) Europäisches Patentamt

European Patent Office

Office européen des brevets

(11) **EP 2 575 266 B1**

(12) **EUROPEAN PATENT SPECIFICATION**

(45) Date of publication and mention
of the grant of the patent:
**04.12.2013 Bulletin 2013/49**

(51) Int Cl.:
*H04B 7/04* (2006.01)  *H04B 7/06* (2006.01)
*H04B 7/08* (2006.01)  *H04B 1/16* (2006.01)

(21) Application number: **11306266.5**

(22) Date of filing: **30.09.2011**

(54) **Apparatus, method, and computer program for a mobile transceiver and a base station transceiver diversity control**

Verfahren, Vorrichtung und Computerprogramm für einen mobilen Sender-Empfänger und einen Basisstations-Sender-Empfänger

Procédé, appareil et programme informatique pour un émetteur/récepteur mobile et pour un émetteur/récepteur de station de base

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**03.04.2013 Bulletin 2013/14**

(73) Proprietor: **Alcatel Lucent
75007 Paris (FR)**

(72) Inventors:
• **Wong, Shin Horng
Chippenham, Wiltshire SN14 0SP (GB)**

• **Baker, Matthew
Canterbury, Kent CT2 9DB (GB)**

(74) Representative: **Sarup, David Alexander
Alcatel-Lucent Telecom Ltd
Intellectual Property Business Group
Christchurch Way
Greenwich
London SE10 0AG (GB)**

(56) References cited:
**WO-A1-01/05088**   **WO-A1-2008/133576**
**US-A1- 2004 253 955**   **US-A1- 2008 151 798**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

Embodiments of the present invention relate to mobile communications, more particularly to transmission configurations of multiple transmit antennas at a mobile transceiver.

Background

Demands for higher data rates for mobile services are steadily increasing. At the same time modem mobile communication systems as 3rd Generation systems (3G) and 4th Generation systems (4G) provide enhanced technologies, which enable higher spectral efficiencies and allow for higher data rates and cell capacities. Among these enhanced technologies there are concepts, which make use of multiple antennas at the mobile transceivers or User Equipment (UE). Uplink Closed Loop Transmit Diversity (CLTD) is currently being specified for High Speed Packet Access (HSPA) in 3GPP (3rd Generation Partnership Project). In CLTD, the UE transmits via two antennas where the transmission signal is pre-coded by (different) complex weights for each antenna prior to transmission. That is to say, the signals of the transmit antennas are adjusted with respect to their phase and amplitude in order to achieve a beneficial superposition of the signals at a base station transceiver. The effect of pre-coding the signals allows the UE transmission to be beamformed to the Node B (NB) or base station antenna. The pre-coding weights are determined by the NB based on channel estimates of the UE's uplink radio link.

Transmit diversity can improve the link and system capacity. 3GPP investigations on CLTD showed to improve the system performance and hence from a network point of view, it should not be deactivated, i.e. it should be used whenever possible.

Document WO2008/133576 A1 discloses methods, a network controller unit and a network unit in a wireless communications system. The transmission/reception mode to be used by user equipment can be decided in the network controller unit based on reports transmitted from the network unit. The reports include a recommendation on the mode to be used by the UE.

Summary

The above mentioned problems are solved by the apparatus and methods of the independent claims. Embodiments are based on the finding that CLTD requires the UE to transmit on both antennas and since each transmit branch requires a Power Amplifier (PA), the UE consumes more power when operating CLTD compared to only single branch or single antenna transmission (i.e. without transmit diversity). As this affects the battery life of the UE it is another finding that it is desirable that CLTD, or more generally the antenna  configuration of a UE, can be deactivated if the impact on the battery life is significant. According to yet another finding, the UE is aware of its battery consumption and therefore it should be allowed for the UE to request for CLTD to be switched off by the NB, requesting to change the antenna configuration, respectively. In other words, it is one finding that from a UE point of view, preserving battery life may be of higher importance than an optimized link or system capacity.

Hence, a balance between performance and battery life can be desirable, and since only the network can enable/disable CLTD, it is a further finding that the UE can provide sufficient information to the network to enable it to decide whether to enable or disable CLTD. Thus, it is desirable to provide suitable and sufficient information from the UE to the network, for the network to decide whether CLTD is enabled or disabled.

In other words, it is a further finding that a simple on/off request from the UE to the network to enable or disable CLTD may not be sufficient, as the network may not be able to decide with respect to a desired balance between performance and battery life of the UE. That is to say, based on a simple on/off request from the UE, it is difficult for the network to evaluate whether it is worthwhile switching off CLTD for the UE requesting for it, since switching off CLTD may affect the system performance. It is yet another finding that a poor algorithm at the UE may cause the UE to ping-pong between turning CLTD off and on. Therefore, additional information in terms of a status change of the UE may assist the network with reaching its decision. Such additional information may comprise a numerical indicator of the potential benefit (or loss) of deactivating or activating CLTD upon a request message from the UE. Hence, embodiments are based on the finding that the network has knowledge of the performance at the system level, and therefore a UE-specific numerical indicator can allow the network to evaluate the overall impact of deactivating or activating CLTD at the system level.

The Rise over Thermal (RoT), as the total reception power over the thermal noise power, at a NB or base station transceiver affects the system performance and it determines the amount of radio resources, e.g. in the form of grants to a UE for the Enhanced Dedicated CHannel (EDCH), that the NB can schedule to the UEs. In most of the radio conditions, when CLTD is turned on, it will reduce the amount of transmit power required, compared to transmission without transmit diversity, to send a packet of the same size. That is to say, for the same grant, i.e. the same uplink resource, the UE can transmit at higher throughput or for the same throughput it requires fewer grants. This can increase the system throughput in the uplink. Therefore, when a UE sends a request to deactivate CLTD, the NB needs to know the amount of additional grants it may require to maintain the same system uplink throughput. A simple ON/OFF bit request from the UE does not tell the NB this information.

It is another finding of some embodiments, that a minimum time can be defined by the network between two UE requests. Such a time setting may avoid frequent signaling of the above described requests by a particular UE. This time setting will also be referred to as suspension time. The network, e.g. a base station receiver, a Node B, or a Radio Network Controller (RNC), may then configure the UEs such that excessive signaling of requests to change the antenna configuration is avoided.

Embodiments can provide the advantage, that a base station transceiver or a NodeB is allowed or enabled to evaluate the impact on system performance if CLTD is turned off due to a UE's request, for different antenna configuration at the UE, respectively. Therewith uplink CLTD, or different antenna configurations in general, can be used as an attractive feature that increases uplink system throughput and balanced with its big impact on UE battery life. Hence, embodiments can allow a NB to balance between system throughput and UE battery life.

Embodiments provide an apparatus for a mobile transceiver in a mobile communication system, i.e. embodiments may provide said apparatus to be operated by or included in a mobile transceiver. In the following, the apparatus will also be referred to as mobile transceiver apparatus. The mobile communication system may, for example, correspond to one of the mobile communication systems standardized by the 3rd Generation Partnership Project (3GPP), as Universal Terrestrial Radio Access Network (UTRAN) or Evolved UTRAN (E-UTRAN), e.g. Universal Mobile Telecommunication System (UMTS), Long Term Evolution (LTE) or LTE-Advanced (LTE-A), or mobile communication systems with different standards, e.g. Worldwide Interoperability for Microwave Access (WIMAX) IEEE 802.16 or Wireless Local Area Network (WLAN) IEEE 802.11, generally any system based on Code Division Multiple Access (CDMA), Orthogonal Frequency Division Multiple Access (OFDMA), etc. In the following the terms mobile communication system and mobile communication network are used synonymously.

Furthermore, the mobile transceiver operates multiple antennas for transmitting radio signals to a base station transceiver. The transmission from the mobile transceiver to the base station transceiver can be circuit switched, as e.g. using a Dedicated CHannel (DCH) in a UTRAN, or packet switched, as e.g. using an Enhanced Dedicated CHannel (EDCH) for High Speed Uplink Packet Access (HSUPA) in a UTRAN. The mobile transceiver apparatus comprises means for determining a desired transmission configuration for the multiple antennas based on a status of the mobile transceiver. In other words, the mobile transceiver may evaluate different transmission configurations, as e.g. CLTD versus single antenna transmission, against, for example, its battery status. The mobile transceiver apparatus may then determine that it needs to safe battery life time and find a desired transmission configuration, which consumes less energy, e.g. which prolongs the remaining battery life time. The means for determining is further adapted to determine information on a potential status change of the mobile transceiver if the desired transmission configuration was used instead of a current transmission configuration for the multiple antennas. The potential status change may, for example, be the prolonged battery lifetime; it can also correspond to changes in transmission power or power consumption, as will be detailed subsequently.

The mobile transceiver apparatus further comprises means for transmitting information on a request of the desired transmission configuration and the information on the potential status change to the base station transceiver. In other words, the mobile transceiver apparatus may provide the request for changing to the desired transmission configuration and additionally information on the advantages, e.g. in battery lifetime, or disadvantages, e.g. lower data rate, higher transmission power, to the base station transceiver.

In further embodiments, the mobile transceiver can comprise means for receiving information on an instructed transmission configuration from the base station transceiver. In other words, the base station transceiver may provide an instruction to the mobile transceiver apparatus as a response to the information on the request of the desired transmission configuration and the information on the potential status change. The instructed transmission configuration can comprise information on the current transmission configuration or on the desired transmission configuration. Hence, the base station transceiver may grant the request for changing the transmission configuration to the desired transmission configuration or it may not and therewith indicate that a current transmission configuration shall be kept.

Furthermore, the mobile transceiver apparatus may comprise means for controlling the transmission on the multiple antennas based on the information on the instructed transmission configuration. That is to say, that the mobile transceiver apparatus follows the instructional information of the base station transceiver.

In embodiments, the desired transmission configuration may correspond to a single antenna transmission configuration and the current transmission configuration may correspond to a multi antenna transmission configuration. The multi antenna configuration can correspond to a closed loop transmit diversity (CLTD) configuration. The status of the mobile transceiver may, for example, correspond to a battery state of the mobile transceiver. The information on the potential status change may indicate a reduction in transmission power or a reduction in the power consumption of the mobile transceiver if the desired transmission configuration was used instead of the current transmission configuration.

In some embodiments, the information on the potential status change may comprise information on a ratio of an average transmit power per data unit, e.g. per kilobit, kilobyte, per number of transport blocks, or per any other predefined amount of data, when using the current transmission configuration and an average transmit power per data unit if the desired transmission configuration was used. In some embodiments the information on the potential status change may comprise information on a ratio of an average power consumption of the mobile transceiver per data unit when using the current transmission configuration and an average power consumption of the mobile transceiver per data unit if the desired transmission configuration was used. The average power consumption may refer to the radio transmission chain of the mobile transceiver, i.e. the mobile transceiver may operate multiple transmission branches for the multiple antennas. Each transmission branch may have separate mixers, filters, power amplifiers, etc. The power consumption may therefore in some embodiments refer to one or more or all of the transmission branches only, rather than to the overall power consumption of the mobile transceiver including power consumption of display and any peripheral devices.

In further embodiments the information on the potential status change may comprise information on a ratio of an achievable data rate at a current transmit power level when using the current transmission configuration and a potential achievable data rate at the current transmit power level if the desired transmission configuration was used. The potential status change may comprise information on a remaining amount of battery life time when using the current transmission configuration and if the desired transmission configuration was used. It can comprise information on a ratio of a remaining amount of battery life time when using the current transmission configuration and if the desired transmission configuration was used. In embodiments, the potential status change may comprise information on a power headroom of the mobile transceiver when using the current transmission configuration and if the desired transmission configuration was used, information on a ratio of the power headrooms, respectively. The power headroom of the mobile transceiver may indicate how much the transmission power can be increased before the maximum transmission power is reached. In other words, the power headroom may indicate how much a current or potential transmission power is below a maximum transmission power.

The means for receiving can be is further adapted to receive information on a suspension time, i.e. a time for which further requests for transmission configuration changes are suspended. In other words, the base station transceiver may, upon having received a request for changing to a desired configuration from a mobile transceiver, suspend any further requests from that mobile transceiver for a certain time, the suspension time. In the mobile transceiver apparatus the means for transmitting the information on the request of the desired transmission configuration can then be adapted to suspend transmission of information on a request for a desired transmission configuration for the suspension time after having transmitted the information on the request.

Embodiments further provide an apparatus for a base station transceiver in a mobile communication system, i.e. embodiments may provide said apparatus to be operated by or included in a base station transceiver. In the following, the apparatus will also be referred to as base station transceiver apparatus. The mobile communication system may correspond to one of the above listed mobile communication systems. The mobile communication system further comprises a mobile transceiver operating multiple antennas for transmitting radio signals to the base station transceiver according to the above description. The base station transceiver comprises means for receiving information on a desired transmission configuration and information on a potential status change of the mobile transceiver from the mobile transceiver, in line with what is described above. The base station transceiver apparatus further comprises means for determining a potential load status of the base station transceiver based on the information on the potential status change of the mobile transceiver.

In other words, the base station transceiver apparatus may determine or estimate how its load condition would change based on the potential status change of the mobile transceiver. For example, if the information of the potential status change indicates that the mobile transceiver would increase its average transmission power per data unit by 2dB, the base station transceiver apparatus may evaluate how this will affect its load condition and then decide whether or not to grant the mobile transceiver apparatus' request. Hence, in embodiments, the base station transceiver apparatus may further comprise means for transmitting information on an instructed transmission configuration to the mobile transceiver. The information on the instructed transmission configuration may indicate the desired transmission configuration if the potential load status of the base station transceiver stays below a load threshold if the mobile transceiver used the desired transmission configuration instead of a current transmission configuration.

The potential load status of the base station transceiver may correspond to a ratio of the potential overall reception power to the thermal power, i.e. the so called Rise over Thermal (RoT), which can be used as a load measure at a base station for the uplink. The load threshold may correspond to a predetermined maximum load threshold, i.e. the base station transceiver apparatus may grant the request of the mobile transceiver apparatus if the overall load condition of the base station transceiver remains below the maximum threshold.

The base station transceiver apparatus may base its decision whether to grant the request on two conditions. The means for transmitting the information on the instructed transmission configuration to the mobile transceiver may then transmit the information on the instructed transmission configuration indicating the desired transmission configuration if the potential load status of the base station transceiver increases by less than a predetermined increase threshold, if the mobile transceiver used the desired transmission configuration instead of a current transmission configuration. In other words, the request of the mobile transceiver apparatus may be granted if the overall load stays below a maximum threshold and if the load increase evoked by the particular mobile transceiver is less than an increase threshold, which is applied to the individual increases.

The base station transceiver apparatus may base its decision whether to grant the request on even three conditions. In some embodiments, the load threshold may correspond to a predetermined maximum load threshold and the means for transmitting the information on the instructed transmission configuration to the mobile transceiver may transmit the information on the instructed transmission configuration indicating the desired transmission configuration if the potential load status of the base station transceiver increases by more than the increase threshold if the mobile transceiver used the desired transmission configuration instead of a current transmission configuration, and when the information on the potential status change of the mobile transceiver indicates a battery life time saving of the mobile transceiver by more than a predetermined battery saving threshold. In other words, the request of the mobile transceiver apparatus may be granted if the overall load stays below a maximum threshold, if the load increase evoked by the particular mobile transceiver is more than an increase threshold, which is applied to the individual increases, and if the battery life time saving of the mobile transceiver is more than a battery saving threshold, which may justify the exceedance of the individual increase.

In embodiments, the desired transmission configuration may correspond to a single antenna transmission configuration and the current transmission configuration may correspond to a multi antenna transmission configuration. The multi antenna configuration can correspond to a closed loop transmit diversity configuration (CLTD). In line with the above description, the potential status change information may indicate a reduction in transmission power or a reduction in the power consumption of the mobile transceiver if the desired transmission configuration was used instead of the current transmission configuration.

The potential status change information can comprise information on a ratio of an average transmit power per data unit when using the current transmission configuration and an average transmit power per data unit if the desired transmission configuration was used. The potential status change information may comprise information on a ratio of an average power consumption of the mobile transceiver per data unit when using the current transmission configuration and an average power consumption of the mobile transceiver per data unit if the desired transmission configuration was used. The average power consumption may refer to the radio transmission chain of the mobile transceiver.

As it has also been described for the mobile transceiver apparatus, the potential status change information can comprise information on a ratio of an achievable data rate at a current transmit power level of the mobile transceiver, when using the current transmission configuration and an achievable data rate at the current transmit power level if the desired transmission configuration was used. The potential status change information can comprise information on a remaining amount of battery life time when using the current transmission configuration and if the desired transmission configuration was used. It may comprise information on a ratio of a remaining amount of battery life time when using the current transmission configuration and if the desired transmission configuration was used, or information on a power headroom of the mobile transceiver when using the current transmission configuration and if the desired transmission configuration was used. It may comprise information on a ratio of the power headrooms.

In some embodiments the means for transmitting can be further adapted to transmit information on a suspension time indicating to the mobile transceiver that transmission of information on a request of the desired transmission configuration is suspended for the suspension time after having transmitted the information on the request.

Embodiments further provide a mobile communication system comprising a mobile transceiver with a mobile transceiver apparatus according to the above description and a base station transceiver with a base station transceiver apparatus according to the above description.

Embodiments further provide a method for a mobile transceiver in a mobile communication system, the mobile transceiver operating multiple antennas for transmitting radio signals to a base station transceiver. The method comprises a step of determining a desired transmission configuration for the multiple antennas based on a status of the mobile transceiver and a step of determining information on a potential status change of the mobile transceiver when using the desired transmission configuration instead of a current transmission configuration for the multiple antennas. The method further comprises a step of transmitting information on a request of the desired transmission configuration and the information on the potential status change to the base station transceiver. In embodiments, the method may further comprise a step of receiving information on an instructed transmission configuration from the base station transceiver, the instructed transmission configuration comprising information on the current transmission configuration or on the desired transmission configuration. The method may comprise a further step of controlling the transmission on the multiple antennas based on the information on the instructed transmission configuration.

Embodiments further provide a method for a base station transceiver in a mobile communication system, the mobile communication system further comprising a mobile transceiver operating multiple antennas for transmitting radio signals to a base station transceiver. The method comprises a step of receiving information on a desired transmission configuration and information on a potential status change of the mobile transceiver from the mobile transceiver and a step of determining a potential load status of the base station transceiver based on the information on the desired transmission configuration and the information on the status change of the mobile transceiver. The method further comprises a step of transmitting information on an instructed transmission configuration to the mobile transceiver. In embodiments, the information on the instructed transmission configuration may indicate the desired transmission configuration if the potential load status of the base station transceiver stays below a load threshold if the mobile transceiver used the desired transmission configuration instead of a current transmission configuration.

Embodiments further provide a computer program having a program code for performing one of the above described methods, when the computer program is executed on a computer or processor.

Brief description of the Figures

Some other features or aspects will be described using the following non-limiting embodiments of apparatuses and/or methods and/or computer programs by way of example only, and with reference to the accompanying figures, in which

Figure 1 shows an embodiment of an apparatus for a mobile transceiver;

Figure 2 shows an embodiment of an apparatus for a base station transceiver;

Figure 3 depicts an embodiment for a mobile communication network;

Figure 4 shows a block diagram of an embodiment of a method for a mobile transceiver; and

Figure 5 shows a block diagram of an embodiment of a method for a base station transceiver.

Description of some Embodiments

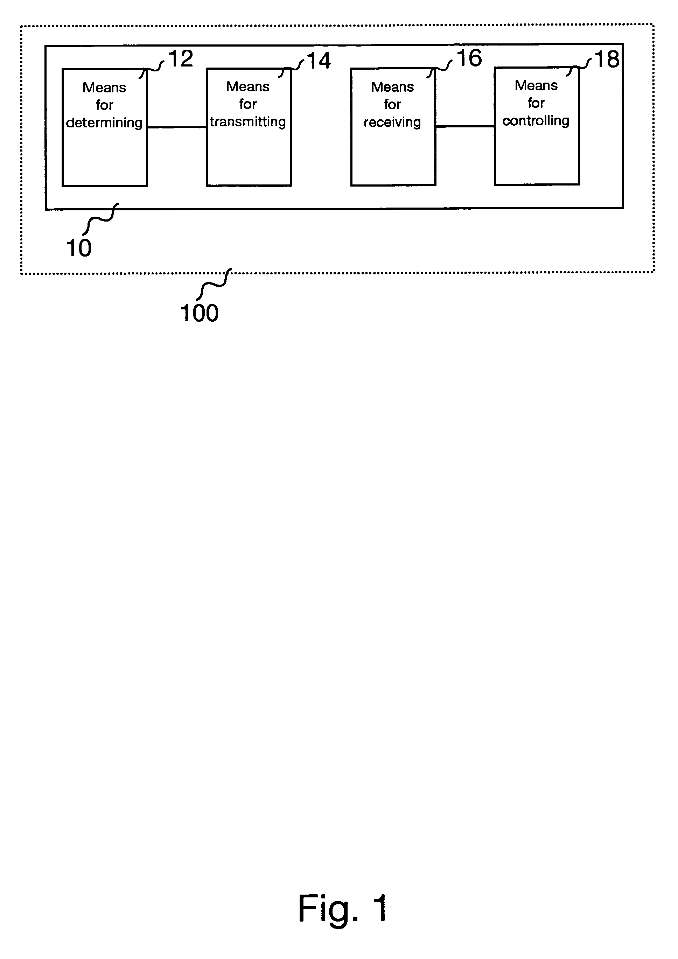

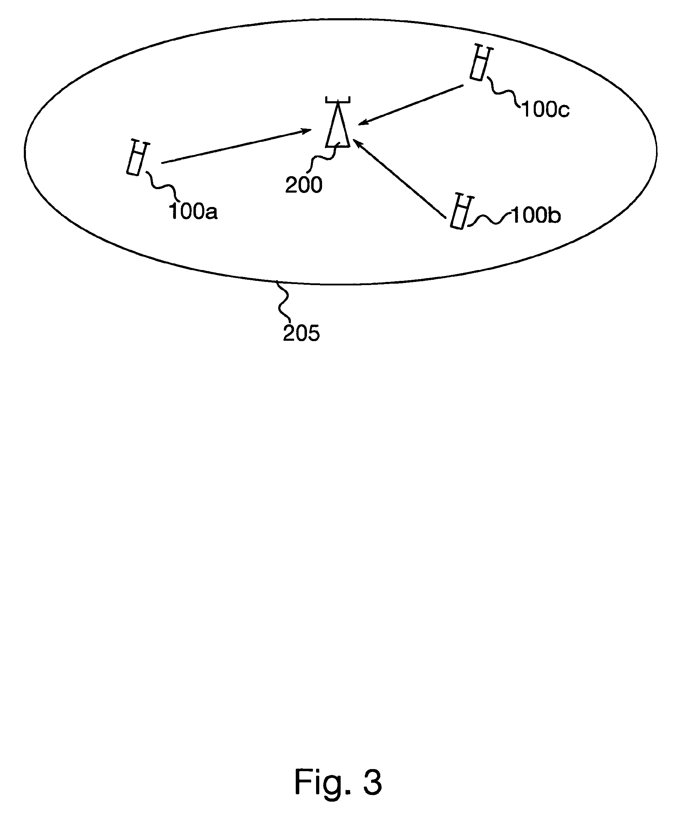

Figure 1 shows an embodiment of an apparatus 10 for a mobile transceiver 100 in a mobile communication system. The mobile transceiver 100 is shown using a dotted line to indicate that a mobile transceiver as such is optional. Optional features or components will be indicated by dotted lines. The mobile transceiver 100 operates multiple antennas for transmitting radio signals to a base station transceiver 200. For a better overview, Figure 3 illustrates an embodiment of a mobile communication system, which is assumed to be a UTRAN using HSUPA, with three mobile transceivers 100a, 100b and 100c, as well as a base station transceiver 200. It is assumed that the mobile transceivers 100a, 100b and 100c all comprise a mobile transceiver apparatus 10 as shown in Figure 1. Note that the multiple antennas are shown or symbolized as two antennas with parallel orientation in Figure 3. In embodiments, any physical antenna configuration can be implemented at the UE or mobile transceiver 100a, 100b, 100c, as, for example, cross polarized dipole antennas, patch antennas, antenna arrays, etc. The area 205 indicated in Figure 3 shows the coverage area of the base station transceiver 200, which can also be referred to as cell 205.

Coming back to Figure 1, the embodiment of the mobile transceiver apparatus 10 comprises means for determining 12 a desired transmission configuration for the multiple antennas based on a status of the mobile transceiver 100. The means for determining 12 is further adapted to determine information on a potential status change of the mobile transceiver 100 if the desired transmission configuration was used instead of a current transmission configuration for the multiple antennas. Moreover, the means for transmitting 14 information on a request of the desired transmission configuration and the information on the potential status change to the base station transceiver 200 is coupled to the means for determining 12. Furthermore, the embodiment of the mobile transceiver apparatus 10 comprises means for receiving 16, which is coupled to means for controlling 18. The means for receiving 16 is adapted to receive information on an instructed transmission configuration from the base station transceiver 200. The instructed transmission configuration comprises information on the current transmission configuration or on the desired transmission configuration. The means for controlling 18 is adapted to control the transmission on the multiple antennas based on the information on the instructed transmission configuration.

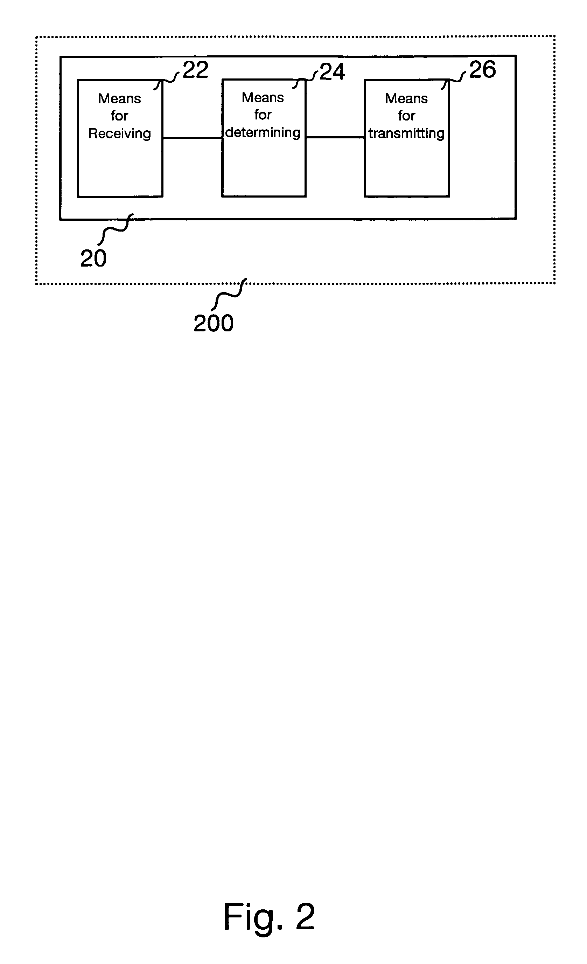

Figure 2 depicts an embodiment of a corresponding apparatus 20 for a base station transceiver 200 in a mobile communication system. As the base station transceiver 200 as such is optional, it is indicated using dotted lines. The base station transceiver apparatus 20 comprises means for receiving 22 information on a desired transmission configuration and information on a potential status change of the mobile transceiver 100 from the mobile transceiver 100, which is coupled to means for determining 24. The means for determining 24 is adapted to determine a potential load status of the base station transceiver 200 based on the information on the potential status change of the mobile transceiver 100. The means for determining 24 is coupled to means for transmitting 26. The means for transmitting 26 is adapted to transmit information on an instructed transmission configuration to the mobile transceiver 100. The information on the instructed transmission configuration indicates the desired transmission configuration if the potential load status of the base station transceiver 200 stays below a load threshold if the mobile transceiver 100 used the desired transmission configuration instead of a current transmission configuration.

In the present embodiment, the desired transmission configuration corresponds to a single antenna transmission configuration and the current transmission configuration corresponds to a closed loop transmit diversity (CLTD) configuration. The status of the mobile transceiver 100 corresponds to a battery state of the mobile transceiver 100.

The information on the potential status change can correspond to a numerical indicator, which indicates a reduction in transmission power or a reduction in the power consumption of the mobile transceiver 100 if the desired transmission configuration was used instead of the current transmission configuration. In the present embodiment the information on the potential status change comprises information on a ratio of an average transmit power per data unit when using the current transmission configuration and an average transmit power per data unit if the desired transmission configuration was used.

Therefore a possible numerical indication for the potential status change of the mobile transceiver apparatus 10 is the ratio $R_{TX}$, of transmit power per unit throughput, e.g. kilobits per second (kbps), with CLTD over that without CLTD, this can be expressed as follows:

$$ R_{TX} = \frac{TxPwrperRate_{CLTD}}{TxPwrperRate_{SINGLE}} , \qquad (1) $$

where, $TxPwrperRate_{CLTD}$ is the average transmit power the UE 100 requires to send a unit throughput (e.g. kbps) when CLTD is activated and $TxPwrperRate_{SINGLE}$ is the average transmit power the UE 100 would require to send a unit throughput (e.g. kbps) when CLTD was deactivated. It is to be noted that $TxPwrperRate_{CLTD}$ and $TxPwrperRate_{SINGLE}$ change depending on how far the UE 100 is from the NB 200 and therefore the ratio $R_{TX}$ may not be constant. One possible way these parameters can be obtained in embodiments is based on measurements performed at the UE 100, when the UE 100 is operating in CLTD and without CLTD. In some embodiments the values may be estimates rather than accurate values.

In another embodiment, the information on the potential status change comprises information on a ratio of an average power consumption of the mobile transceiver 100 per data unit when using the current transmission configuration and an average power consumption of the mobile transceiver 100 per data unit if the desired transmission configuration was used. In this embodiment, the information on the potential status change could indicate the ratio of the achievable rates at a current power level, with and without CLTD. The UE 100 is concerned about battery consumption and therefore a similar ratio is beneficial to the NB 200 in evaluating the gain (in battery life) versus the loss in system performance. Let the ratio $R_{PWR}$ be the power consumption, e.g. current drawn from the battery, per unit throughput (e.g. kbps) with CLTD over that without CLTD, that is:

$$ R_{PWR} = \frac{PwrperRate_{CLTD}}{PwrperRate_{SINGLE}} , \qquad (2) $$

where, $PwrperRate_{CLTD}$ is the average power consumption the UE 100 requires to send a unit throughput whilst operating in CLTD and $PwrperRate_{SINGLE}$ is the average power consumption the UE 100 would require to send a unit throughput without CLTD. This metric can be dependent upon the UE 100 and a more efficient UE 100 may have lower power consumption per unit throughput. Since the UE 100 will still consume power even if it is not transmitting anything, e.g. to power the screen or just to keep the PA alive, these values, $PwrperRate_{CLTD}$ and $PwrperRate_{SINGLE}$ can be defined only to relate to the power consumption related to the radio transmissions of the UE 100. The average power consumption then refers to the radio transmission chain of the mobile transceiver 100. This may include all power consumption of the radio transmit chain (including PA(s)), but not other aspects of the UE's 100 power consumption. This can enable the indicator to take into account the fact that the number of PAs used might change depending on whether or not CLTD is operational. In embodiments, the information on the desired transmission configuration may comprise an ON/OFF indication and the information on the potential status change may comprise the ratio RTX and ratio RPWR.

In another embodiment, the information on the potential status change comprises information on a remaining amount of battery life time when using the current transmission configuration (CLTD) and if the desired transmission configuration (non-CLTD) was used, or information on a ratio of a remaining amount of battery life time when using the current transmission configuration and if the desired transmission configuration was used. The information on the potential status change may comprise an indicator relating to the amount of time remaining of the UE's 100 battery life based on the current rate of transmission with and without CLTD operation. This can also be expressed as a relative indicator - e.g. the ratio between the two times.

In another embodiment the information on the potential status change corresponds to information on a power headroom of the mobile transceiver 100 when using the current transmission configuration and if the desired transmission configuration was used, or information on a ratio of the power headrooms, respectively. The information from the mobile transceiver 100 may then correspond to the UE's 100 power headroom with and without CLTD, or the ratio of the UE's 100 power headrooms with and without CLTD. In yet another embodiment the information on the potential status change comprises information on a ratio of an achievable data rate at a current transmit power level when using the current transmission configuration (CLTD) and a potential achievable data rate at the current transmit power level if the desired transmission configuration (non-CLTD) was used.

Moreover, in the embodiment of the mobile transceiver apparatus 10 shown in Figure 1, the means for receiving 16 is further adapted to receive information on a suspension time and the means for transmitting 14 the information on the request of the desired transmission configuration is adapted to suspend transmission of information on a request for a desired transmission configuration for the suspension time after having transmitted the information on the request. In the embodiment of the base station transceiver apparatus 20 depicted in Figure 2, the means for transmitting 26 is further adapted to transmit information on a suspension time indicating to the mobile transceiver 100 that transmission of information on a request of the desired transmission configuration is suspended for the suspension time after having transmitted the information on the request. Hence, if a UE's 100 request is rejected, or not explicitly accepted, the UE 100 may not send the same request again for $T_{REQUEST}$ (suspension time) seconds. This may prevent excessive request transmissions by the UE 100 and rejections from the NB 200.

In Figure 3, the NB or base station transceiver 200 has 3 UEs 100a, 100b, and 100c connected to it. In this embodiment the potential load status of the base station transceiver 200 corresponds to a ratio of the potential overall reception power to the thermal power, also referred to as $RoT$, and the load threshold corresponds to a predetermined maximum load threshold $N_{Target}$. Let the current $RoT$ at the NB 200 be $N_0$ and it is assumed that the NB 200 shall manage the $RoT$ such that it shall not exceed a target $N_{Target}$ as predefined maximum load threshold. Let the received power from UE 100a, UE 100b and UE 100c be $P_1$, $P_2$ and $P_3$, e.g. given in milliwatts (mW), at the NB 200. Moreover, it is assumed that UE 100a, UE 100b, and UE 100c are operating with CLTD.

The $RoT$ at the NB 200 can be calculated as:

$$RoT = 1 + \frac{P_1 + P_2 + P_3 + I_{Inter}}{N_T}, \qquad (3)$$

where, $I_{Inter}$ is the intercell interference power and $N_T$ is the thermal noise. It is assumed that UE 100a sends a request to deactivate CLTD, i.e. information on the desired transmission configuration, with the numerical indicators as information on the potential status change as follows:

$$R_{TX} = RTx\_UE100a$$

$$R_{Pwr} = RPwr\_UE100a$$

Let the current average throughput of UE 100a be $S\_UE1$ (in kbps), which is measured at the NB 200. If CLTD is turned off, the power $P_1^*$ required to sustain UE 100a's throughput of $S\_UE1$ is:

$$P_1^* = \frac{1}{RTx\_UE1} \times \frac{P_1}{S\_UE1} \times S\_UE1 = \frac{P_1}{RTx\_UE1}. \qquad (4)$$

Then $N_1$, the $RoT$ if the NB 200 turns off CLTD for UE 100a, can be calculated as:

$$N_1 = 1 + \frac{P_1^* + P_2 + P_3 + I_{Inter}}{N_T}. \tag{5}$$

The NB 200 can then make a decision to turn off CLTD if, for example, $N_1 < N_{Target}$, that is the rise in $RoT$ due to switching off CLTD for UE 100a does not exceed the target $RoT$, i.e. the maximum load threshold.

Alternatively, the NB 200 can make a decision to turn off CLTD if $N_1 - N_0 < N_{Threshold}$. In this embodiment, it can be assumed that when the NB 200 switches off CLTD for UE 100a the $RoT$ rises to $N_1$. The criterion is that the additional rise in $RoT$ due to switching off CLTD does not exceed a threshold. Hence, in this embodiment the load threshold corresponds to a predetermined maximum load threshold $N_{Target}$ and the means for transmitting 26 the information on the instructed transmission configuration to the mobile transceiver 100 transmits the information on the instructed transmission configuration indicating the desired transmission configuration (non-CLTD) if the potential load status $N_1$ of the base station transceiver 200 increases by less than a predetermined increase threshold $N_{Treshold}$, if the mobile transceiver 100 used the desired transmission configuration instead of a current transmission configuration.

For the next embodiment it is assumed that UE 100b in Figure 3 sends a request to deactivate CLTD with the following parameters:

$$R_{TX} = RTx\_UE100b$$

$$R_{Pwr} = RPwr\_UE100b$$

Here, the value $RTx\_UE100b$ is greater than 1. This indicates that the UE 100b is transmitting more power in using CLTD than when not using CLTD. This can be the case if the channel is fast changing or some unknown reasons that resulted in an increase in transmit power. The NB 200 therefore disables CLTD for UE 100b since there is no gain in using CLTD. A fast changing channel can normally be detected by the NB 200 and the NB 200 may have switched off CLTD. In this example, the NB switches off CLTD for UE 100 and the $RoT$ moves to $N_2 < N_1$. This embodiment shows another advantage of the information on the status change in addition to the request. The NB 200 would otherwise never know that CLTD is actually disadvantageous in the radio channel condition the UE 100b is in.

In the next embodiment it is assumed that UE 100c of Figure 3 sends a request to deactivate CLTD with the following parameters:

$$R_{TX} = RTx\_UE100c$$

$$R_{Pwr} = RPwr\_UE100c$$

The NB 200 performs the same calculation to evaluate the $RoT$ to be $N_3$ if UE 100c's CLTD is turned off. It is found that:

$$N_3 < N_{Target}$$

$$N_3 - N_2 > N_{Threshold}$$

Since the rise in *RoT* exceeds the threshold but the absolute value does not exceed the target *RoT,* the NB 200 now evaluates whether it is worth switching off CLTD by considering the UE 100c battery saving. The NB 200 can perform and switch off CLTD if:

$$RPwr\_UE100c > B_{Threshold},$$

where $B_{Threshold}$ is a threshold configured by the network. It is of course possible to send this threshold to the UE 100c and the UE 100c would only send a request if the saving is above this threshold. However the NB 200 would have less flexibility in adjusting $B_{Threshold}$, e.g., it may want $B_{Threshold}$ to be dynamic and dependent on the average battery saving that can be achieved for all UE 100a, 100b, 100c in the cell 205. Thus, in this embodiment the load threshold corresponds to a predetermined maximum load threshold $N_{Target}$. The means for transmitting 26 the information on the instructed transmission configuration to the mobile transceiver 100 transmits the information on the instructed transmission configuration indicating the desired transmission configuration (non-CLTD) if the potential load status $N_3$-$N_2$ of the base station transceiver 200 increases by more than the increase threshold $N_{Threshold}$ if the mobile transceiver 100 used the desired transmission configuration instead of a current transmission configuration, and when the information on the potential status change $RPwr\_UE100c$ of the mobile transceiver 100 indicates a battery life time saving of the mobile transceiver 100 by more than a predetermined battery saving threshold $B_{Threshold}$.

Alternatively, in embodiments the NB 200 could decide whether to switch on/off CLTD based on whether one of the indicators, e.g. $R_{TX}$, is above or below a (predetermined) threshold. In further embodiments the potential status change information comprises information on a ratio of an achievable data rate at a current transmit power level of the mobile transceiver 100 when using the current transmission configuration and an achievable data rate at the current transmit power level if the desired transmission configuration was used.

Embodiments further provide, in line with Figure 3, a mobile communication system comprising a mobile transceiver 100 with an apparatus 10 according to the above description and a base station transceiver 200 with an apparatus 20 according to the above description.

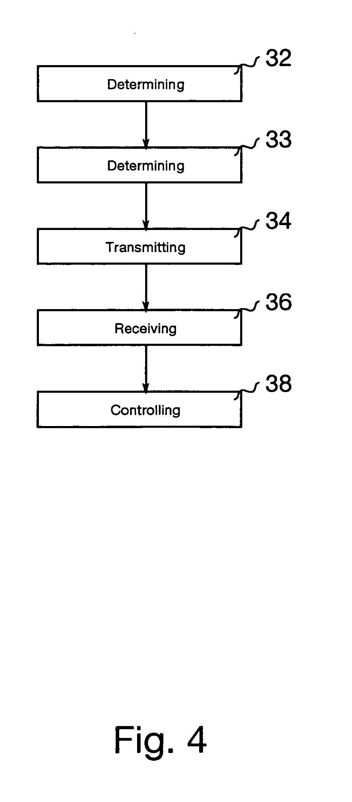

Figure 4 shows a block diagram of an embodiment of a method for a mobile transceiver 100 in a mobile communication system. The mobile transceiver 100 operates multiple antennas for transmitting radio signals to a base station transceiver 200. The method comprises a step of determining 32 a desired transmission configuration for the multiple antennas based on a status of the mobile transceiver 100 and a step of determining 33 information on a potential status change of the mobile transceiver 100 if the desired transmission configuration was used instead of a current transmission configuration for the multiple antennas. The method further comprises a step of transmitting 34 information on a request of the desired transmission configuration and the information on the potential status change to the base station transceiver 200 and a step of receiving 36 information on an instructed transmission configuration from the base station transceiver 200, the instructed transmission configuration comprises information on the current transmission configuration or on the desired transmission configuration. The method further comprises a step of controlling 38 the transmission on the multiple antennas based on the information on the instructed transmission configuration.

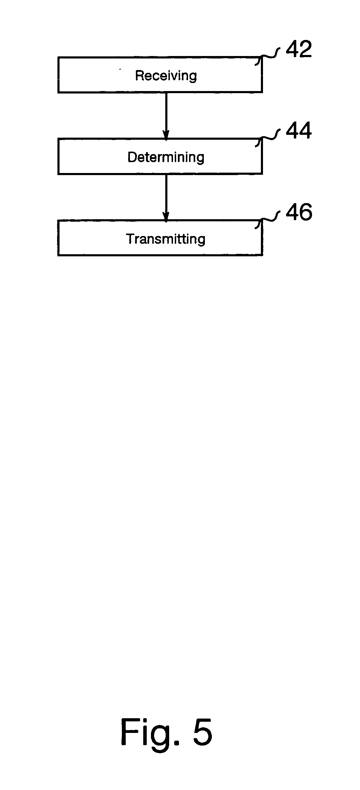

Figure 5 shows a block diagram of an embodiment of a method for a base station transceiver 200 in a mobile communication system. The mobile communication system further comprises a mobile transceiver 100 operating multiple antennas for transmitting radio signals to a base station transceiver 200. The method comprises a step of receiving 42 information on a desired transmission configuration and information on a potential status change of the mobile transceiver 100 from the mobile transceiver 100 and a step of determining 44 a potential load status of the base station transceiver 200 based on the information on the desired transmission configuration and the information on the status change of the mobile transceiver 100. The method further comprises a step of transmitting 46 information on an instructed transmission configuration to the mobile transceiver 100, wherein the information on the instructed transmission configuration indicates the desired transmission configuration if the potential load status of the base station transceiver 200 stays below a load threshold if the mobile transceiver 100 used the desired transmission configuration instead of a current transmission configuration.

Embodiments may further provide a computer program having a program code for performing one of the above methods, when the computer program is executed on a computer or processor.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as magnetic disks and magnetic tapes, hard drives, or optically readable digital data storage media. The embodiments are also intended to cover computers programmed to perform said steps of the above-described methods or (field) programmable logic arrays ((F)PLAs) or (field) programmable gate arrays ((F)PGAs), programmed to perform said steps of the above-described methods.

The description and drawings merely illustrate the principles of the invention. It will thus be appreciated that those skilled in the art will be able to devise various arrangements that, although not explicitly described or shown herein, embody the principles of the invention and are included within its scope as defined by the appended claims. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

Functional blocks denoted as "means for ..." (performing a certain function) shall be understood as functional blocks comprising circuitry that is adapted for performing or to perform a certain function, respectively. Hence, a "means for s.th." may as well be understood as a "means being adapted or suited for s.th.". A means being adapted for performing a certain function does, hence, not imply that such means necessarily is performing said function (at a given time instant).

The functions of the various elements shown in the Figures, including any functional blocks labeled as "means", "means for determining", "means for transmitting", "means for receiving", "means for controlling", etc., may be provided through the use of dedicated hardware, such as "a determiner", "a transmitter", "a receiver", "a controller" etc. as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

## Claims

1. An apparatus (10) for a mobile transceiver (100) in a mobile communication system, the mobile transceiver (100) operating multiple antennas for transmitting radio signals to a base station transceiver (200), the apparatus (10) comprising

   means for determining (12) a desired transmission configuration for the multiple antennas based on a status of the mobile transceiver (100), wherein the desired transmission configuration is based on single antenna transmission or multi antenna transmission, wherein the means for determining (12) is further adapted to determine information on a potential status change of the mobile transceiver (100) if the desired transmission configuration was used instead of a current transmission configuration for the multiple antennas; and

   means for transmitting (14) information on a request of the desired transmission configuration and the information on the potential status change to the base station transceiver (200).

2. The apparatus (10) of claim 1, further comprising means for receiving (16) information on an instructed transmission configuration from the base station transceiver (200), the instructed transmission configuration comprising information on the current transmission configuration or on the desired transmission configuration, and means for controlling (18) the transmission on the multiple antennas based on the information on the instructed transmission configuration and/or wherein the desired transmission configuration corresponds to a single antenna transmission configuration and the current transmission configuration corresponds to a multi antenna transmission configuration and/or wherein the multi antenna configuration corresponds to a closed loop transmit diversity configuration, wherein the status of the mobile transceiver (100) corresponds to a battery state of the mobile transceiver (100) and/or wherein the information on the potential status change indicates a reduction in transmission power or a reduction in the power consumption of the mobile transceiver (100) if the desired transmission configuration was used instead of the current transmission configuration.

3. The apparatus (10) of claim 1, wherein the information on the potential status change comprises information on a ratio of an average transmit power per data unit when using the current transmission configuration and an average transmit power per data unit if the desired transmission configuration was used, or wherein the information on the potential status change comprises information on a ratio of an average power consumption of the mobile transceiver (100) per data unit when using the current transmission configuration and an average power consumption of the mobile transceiver (100) per data unit if the desired transmission configuration was used.

4. The apparatus (10) of claim 1, wherein the information on the potential status change comprises information on a ratio of an achievable data rate at a current transmit power level when using the current transmission configuration and a potential achievable data rate at the current transmit power level if the desired transmission configuration was used, information on a remaining amount of battery life time when using the current transmission configuration and if the desired transmission configuration was used, information on a ratio of a remaining amount of battery life time when using the current transmission configuration and if the desired transmission configuration was used, information on a power headroom of the mobile transceiver (100) when using the current transmission configuration and if the desired transmission configuration was used, and/or information on a ratio of the power headrooms.

5. The apparatus (10) of claim 2, wherein the means for receiving (16) is further adapted to receive information on a suspension time and wherein the means for transmitting (14) the information on the request of the desired transmission configuration is adapted to suspend transmission of information on a request for a desired transmission configuration for the suspension time after having transmitted the information on the request.

6. An apparatus (20) for a base station transceiver (200) in a mobile communication system, the mobile communication system further comprising a mobile transceiver (100) operating multiple antennas for transmitting radio signals to the base station transceiver (200), said apparatus (20) comprising means for receiving (22) information on a desired transmission configuration, wherein the desired transmission configuration is based on single antenna transmission or multi antenna transmission, and information on a potential status change of the mobile transceiver (100) from the mobile transceiver (100);
means for determining (24) a potential load status of the base station transceiver (200) based on the information on the desired transmission configuration and information on the potential status change of the mobile transceiver (100); and
means for transmitting (26) information on an instructed transmission configuration based on said determined potential load status, to the mobile transceiver (100).

7. The apparatus (20) of claim 6, wherein the potential load status of the base station transceiver (200) corresponds to a ratio of the potential overall reception power to the thermal power and wherein the load threshold corresponds to a predetermined maximum load threshold and/or wherein the information on the instructed transmission configuration indicates the desired transmission configuration if the potential load status of the base station transceiver (200) stays below a load threshold if the mobile transceiver (100) used the desired transmission configuration instead of a current transmission configuration and/or wherein the means for transmitting (26) is further adapted to transmit information on a suspension time indicating to the mobile transceiver (100) that transmission of information on a request of the desired transmission configuration is suspended for the suspension time after having transmitted the information on the request.

8. The apparatus (20) of claim 6, wherein the load threshold corresponds to a predetermined maximum load threshold and wherein the means for transmitting (26) the information on the instructed transmission configuration to the mobile transceiver (100) transmits the information on the instructed transmission configuration indicating the desired transmission configuration if the potential load status of the base station transceiver (200) increases by less than a predetermined increase threshold, if the mobile transceiver (100) used the desired transmission configuration instead of a current transmission configuration, or wherein the load threshold corresponds to a predetermined maximum load threshold and wherein the means for transmitting (26) the information on the instructed transmission configuration to the mobile transceiver (100) transmits the information on the instructed transmission configuration indicating the desired transmission configuration if the potential load status of the base station transceiver (200) increases by more than the increase threshold if the mobile transceiver (100) used the desired transmission configuration instead of a current transmission configuration, and when the information on the potential status change of the mobile transceiver (100) indicates a battery life time saving of the mobile transceiver (100) by more than a predetermined battery saving threshold.

9. The apparatus (20) of claim 6, wherein the desired transmission configuration corresponds to a single antenna transmission configuration and the current transmission configuration corresponds to a multi antenna transmission configuration and/or wherein the multi antenna configuration corresponds to a closed loop transmit diversity configuration, wherein the potential status change information indicates a reduction in transmission power or a reduction in the power consumption of the mobile transceiver (100) if the desired transmission configuration was used instead of the current transmission configuration.

10. The apparatus (20) of claim 6, wherein the potential status change information comprises information on a ratio of an average transmit power per data unit when using the current transmission configuration and an average transmit power per data unit if the desired transmission configuration was used, or wherein the potential status change information comprises information on a ratio of an average power consumption of the mobile transceiver (100) per data unit when using the current transmission configuration and an average power consumption of the mobile transceiver (100) per data unit if the desired transmission configuration was used.

11. The apparatus (20) of claim 6, wherein the potential status change information comprises information on a ratio of an achievable data rate at a current transmit power level of the mobile transceiver (100) when using the current transmission configuration and an achievable data rate at the current transmit power level if the desired transmission configuration was used, information on a remaining amount of battery life time when using the current transmission configuration and if the desired transmission configuration was used, information on a ratio of a remaining amount of battery life time when using the current transmission configuration and if the desired transmission configuration was used, information on a power headroom of the mobile transceiver (100) when using the current transmission configuration and if the desired transmission configuration was used, and/or information on a ratio of the power headrooms.

12. A mobile communication system comprising a mobile transceiver (100) with an apparatus (10) according to claim 1 and a base station transceiver (200) with an apparatus (20) according to claim 6.

13. A method for a mobile transceiver (100) in a mobile communication system, the mobile transceiver (100) operating multiple antennas for transmitting radio signals to a base station transceiver (200), comprising, in the mobile transceiver (100),
determining (32) a desired transmission configuration for the multiple antennas based on a status of the mobile transceiver, wherein the desired transmission configuration is based on single antenna transmission or multi antenna transmission;
determining (33) information on a potential status change of the mobile transceiver (100) when using the desired transmission configuration instead of a current transmission configuration for the multiple antennas; and
transmitting (34) information on a request of the desired transmission configuration and the information on the potential status change to the base station transceiver (200).

14. A method for a base station transceiver (200) in a mobile communication system, the mobile communication system further comprising a mobile transceiver (100) operating multiple antennas for transmitting radio signals to a base station transceiver (200), comprising, in the base station transceiver (200), receiving (42) information on a desired transmission configuration, wherein the desired transmission configuration is based on single antenna transmission or multi antenna transmission, and information on a potential status change of the mobile transceiver (100) from the mobile transceiver (100);
determining (44) a potential load status of the base station transceiver (200) based on the information on the desired transmission configuration and the information on the potential status change of the mobile transceiver (100); and
transmitting (46) information on an instructed transmission configuration based on said determined potential load status to the mobile transceiver (100).

15. A computer program having a program code for performing one of the methods of claims 13 or 14, when the computer program is executed on a computer or processor.

**Patentansprüche**

1. Vorrichtung (10) für einen mobilen Transceiver (100) in einem mobilen Kommunikationssystem, wobei der mobile Transceiver (100) mehrfache Antennen für die Übertragung von Funksignalen an einen Basisstations-Transceiver (200) betreibt, wobei die Vorrichtung (10) umfasst:

Mittel zum Ermitteln (12) einer gewünschten Übertragungskonfiguration für die mehrfachen Antennen auf der Basis des Zustands des mobilen Transceivers (100), wobei die gewünschte Übertragungskonfiguration auf Einzelantennenübertragung oder Mehrfachantennenübertragung basiert, wobei das Mittel zum Ermitteln (12) weiterhin dazu ausgelegt ist, Informationen über einen potenziellen Statuswechsel des mobilen Transceivers (100) zu ermitteln, wenn die gewünschte Übertragungskonfiguration anstatt einer aktuellen Übertragungskonfiguration für die mehrfachen Antennen verwendet werden würde; und

Mittel zum Übertragen (14) der Informationen über eine Anforderung der gewünschten Übertragungskonfiguration und der Informationen über den potenziellen Statuswechsel an den Basisstations-Transceiver (200).

2. Vorrichtung (10) nach Anspruch 1, weiterhin umfassend Mittel zum Empfangen (16) von Informationen über eine angewiesene Übertragungskonfiguration von dem Basisstations-Transceiver (200), wobei die angewiesene Übertragungskonfiguration Informationen über eine aktuelle Übertragungskonfiguration oder über die gewünschte Übertragungskonfiguration umfasst, und Mittel zum Steuern (18) der Übertragung auf den mehrfachen Antennen auf der Basis der Informationen über die angewiesene Übertragungskonfiguration, und/oder wobei die gewünschte Übertragungskonfiguration einer Einzelantennen-Übertragungskonfiguration entspricht und die aktuelle Übertragungskonfiguration einer Mehrfachantennen-Übertragungskonfiguration entspricht, und/oder wobei die Mehrfachantennenkonfiguration einer Closed-Loop-Transmit-Diversity-Konfiguration entspricht, wobei der Status des mobilen Transceivers (100) einem Batteriezustand des mobilen Transceivers (100) entspricht, und/oder wobei die Informationen über den potenziellen Statuswechsel eine Reduzierung der Übertragungsleistung oder eine Reduzierung der Leistungsaufnahme des mobilen Transceivers (100) angeben, wenn die gewünschte Übertragungskonfiguration anstatt der aktuellen Übertragungskonfiguration verwendet werden würde.

3. Vorrichtung (10) nach Anspruch 1, wobei die Informationen über den potenziellen Statuswechsel Informationen über ein Verhältnis einer mittleren Sendeleistung pro Dateneinheit bei Verwendung der aktuellen Übertragungskonfiguration zu einer mittleren Sendeleistung pro Dateneinheit, wenn die gewünschte Übertragungskonfiguration verwendet werden würde, enthalten, oder wobei die Informationen über den potenziellen Statuswechsel Informationen über ein Verhältnis einer mittleren Leistungsaufnahme des mobilen Transceivers (100) pro Dateneinheit bei Verwendung der aktuellen Übertragungskonfiguration zu einer mittleren Leistungsaufnahme des mobilen Transceivers (100) pro Dateneinheit, wenn die gewünschte Übertragungskonfiguration verwendet werden würde, enthalten.

4. Vorrichtung (10) nach Anspruch 1, wobei die Informationen über den potenziellen Statuswechsel Informationen über ein Verhältnis einer erreichbaren Datenrate bei einem aktuellen Sendeleistungspegel, wenn die aktuelle Übertragungskonfiguration verwendet wird, zu einer potenziellen erreichbaren Datenrate bei dem aktuellen Sendeleistungspegel, wenn die gewünschte Übertragungskonfiguration verwendet werden würde, Informationen über eine verbleibende Batterielebensdauer, wenn die aktuelle Übertragungskonfiguration verwendet wird und wenn die gewünschte Übertragungskonfiguration verwendet werden würde, Informationen über ein Verhältnis einer verbleibenden Batterielebensdauer, wenn die aktuelle Übertragungskonfiguration verwendet wird und wenn die gewünschte Übertragungskonfiguration verwendet werden würde, Informationen über eine Leistungsreserve des mobilen Transceivers (100) bei Verwendung der aktuellen Übertragungskonfiguration und wenn die gewünschte Übertragungskonfiguration verwendet würde, und/oder Informationen über ein Verhältnis der Leistungsreserven enthalten.

5. Vorrichtung (10) nach Anspruch 2, wobei das Mittel zum Empfangen (16) weiterhin für den Empfang von Informationen über eine Unterbrechungsdauer ausgelegt ist, und wobei das Mittel zum Übertragen (14) der Informationen über die Anforderung der gewünschten Übertragungskonfiguration dazu ausgelegt ist, die Übertragung von Informationen über eine Anforderung einer gewünschten Übertragungskonfiguration während der Unterbrechungsdauer zu unterbrechen, nachdem die Informationen über die Anforderung übertragen wurden.

6. Vorrichtung (20) für einen Basisstations-Transceiver (200) in einem mobilen Kommunikationssystem, wobei das mobile Kommunikationssystem weiterhin einen mobilen Transceiver (100) umfasst, welcher mehrfache Antennen für die Übertragung von Funksignalen an den Basisstations-Transceiver (200) betreibt, wobei die Vorrichtung (20) umfasst:

Mittel zum Empfangen (22) von Informationen über eine gewünschte Übertragungskonfiguration, wobei die gewünschte Übertragungskonfiguration auf Einzelantennenübertragung oder Mehrfachantennenübertragung basiert, und von Informationen über einen potenziellen Statuswechsel des mobilen Transceivers (100) von dem mobilen Transceiver (100);

Mittel zum Ermitteln (24) eines potenziellen Lastzustands des Basisstations-Transceivers (200) auf der Basis der Informationen über die gewünschte Übertragungskonfiguration und der Informationen über den potenziellen Statuswechsel des mobilen Transceivers (100); und

Mittel zum Übertragen (26) der Informationen über eine angewiesene Übertragungskonfiguration auf der Basis des besagten ermittelten potenziellen Lastzustands an den mobilen Transceiver (100).

7. Vorrichtung (20) nach Anspruch 6, wobei der potenzielle Lastzustand des Basisstations-Transceivers (200) einem Verhältnis der potenziellen Gesamt-Empfangsleistung zur thermischen Leistung entspricht, und wobei der Lastgrenzwert einem vorbestimmten maximalen Lastgrenzwert entspricht, und/oder wobei die Informationen über die angewiesene Übertragungskonfiguration die gewünschte Übertragungskonfiguration angeben, wenn der potenzielle Lastzustand des Basisstations-Transceivers (200) unter einem Lastgrenzwert bleibt, wenn der mobile Transceiver (100) die gewünschte Übertragungskonfiguration anstatt einer aktuellen Übertragungskonfiguration verwenden würde, und/oder wobei das Mittel zum Übertragen (26) weiterhin dazu ausgelegt ist, die Informationen über eine Unterbrechungsdauer, welche dem mobilen Transceiver (100) angeben, dass die Übertragung von Informationen über eine Anforderung der gewünschten Übertragungskonfiguration während der Unterbrechungsdauer unterbrochen wird, nachdem die Informationen über die Anforderung übertragen wurden, zu übertragen.

8. Vorrichtung (20) nach Anspruch 6, wobei der Lastgrenzwert einem vorbestimmten maximalen Lastgrenzwert entspricht, und wobei das Mittel zum Übertragen (26) der Informationen über die angewiesene Übertragungskonfiguration an den mobilen Transceiver (100) die Informationen über die angewiesene Übertragungskonfiguration unter Angabe der gewünschten Übertragungskonfiguration überträgt, wenn sich der potenzielle Lastzustand des Basisstations-Transceivers (200) um weniger als einen vorgegebenen Erhöhungsgrenzwert erhöht, wenn der mobile Transceiver (100) die gewünschte Übertragungskonfiguration anstatt einer aktuellen Übertragungskonfiguration verwenden würde, oder wobei der Lastgrenzwert einem vorgegebenen Lastgrenzwert entspricht, und wobei das Mittel zum Übertragen (26) der Informationen über die angewiesene Übertragungskonfiguration an den mobilen Transceiver (100) die Informationen über die angewiesene Übertragungskonfiguration unter Angabe der gewünschten Übertragungskonfiguration überträgt, wenn sich der potenzielle Lastzustand des Basisstations-Transceivers (200) um mehr als den Erhöhungsgrenzwert erhöht, wenn der mobile Transceiver (100) die gewünschte Übertragungskonfiguration anstatt der aktuellen Übertragungskonfiguration verwenden würde, und wenn die Informationen über den potenziellen Statuswechsel des mobilen Transceivers (100) eine Batterielebensdauereinsparung des mobilen Transceivers (100) um mehr als einen vorgegebenen Batterieeinsparungsgrenzwert anzeigen.

9. Vorrichtung (20) nach Anspruch 6, wobei die gewünschte Übertragungskonfiguration einer Einzelantennen-Übertragungskonfiguration entspricht und die aktuelle Übertragungskonfiguration einer Mehrfachantennen-Übertragungskonfiguration entspricht, und/oder wobei die Mehrfachantennen-Übertragungskonfiguration einer Closed-Loop-Transmit-Diversity-Konfiguration entspricht, wobei die Informationen über einen potenziellen Statuswechsel eine Reduzierung der Sendeleistung oder eine Reduzierung der Leistungsaufnahme des mobilen Transceivers (100) anzeigen, wenn die gewünschte Übertragungskonfiguration anstatt der aktuellen Übertragungskonfiguration verwendet werden würde.

10. Vorrichtung (20) nach Anspruch 6, wobei die Informationen über einen potenziellen Statuswechsel Informationen über ein Verhältnis einer mittleren Sendeleistung pro Dateneinheit bei Verwendung der aktuellen Übertragungskonfiguration zu einer mittleren Sendeleistung pro Dateneinheit, wenn die gewünschte Übertragungskonfiguration verwendet würde, enthalten, oder wobei die Informationen über einen potenziellen Statuswechsel Informationen über ein Verhältnis einer mittleren Leistungsaufnahme des mobilen Transceivers (100) pro Dateneinheit bei Verwendung der aktuellen Übertragungskonfiguration zu einer mittleren Leistungsaufnahme des mobilen Transceivers (100) pro Dateneinheit, wenn die gewünschte Übertragungskonfiguration verwendet würde, enthalten.

11. Vorrichtung (20) nach Anspruch 6, wobei die Informationen über einen potenziellen Statuswechsel Informationen über ein Verhältnis einer erreichbaren Datenrate bei einem aktuellen Sendeleistungspegel des mobilen Transceivers (100) bei Verwendung der aktuellen Übertragungskonfiguration zu einer erreichbaren Datenrate bei dem aktuellen Sendeleistungspegel, wenn die gewünschte Übertragungskonfiguration verwendet werden würde, Informationen über eine verbleibende Batterielebensdauer bei Verwendung der aktuellen Übertragungskonfiguration und wenn die gewünschte Übertragungskonfiguration verwendet werden würde, Informationen über ein Verhältnis einer verbleibenden Batterielebensdauer bei Verwendung der aktuellen Übertragungskonfiguration und wenn die gewünschte Übertragungskonfiguration verwendet werden würde, Informationen über eine Leistungsreserve des mobilen Transceivers (100) bei Verwendung der aktuellen Übertragungskonfiguration und wenn die gewünschte Übertragungskonfiguration verwendet werden würde, und/oder Informationen über ein Verhältnis der Leistungsreserven enthalten.

12. Mobiles Kommunikationssystem, umfassend einen mobilen Transceiver (100) mit einer Vorrichtung (10) nach Anspruch 1 und einen Basisstations-Transceiver (200) mit einer Vorrichtung (20) nach Anspruch 6.

13. Verfahren für einen mobilen Transceiver (100) in einem mobilen Kommunikationssystem, wobei der mobile Transceiver (100) mehrfache Antennen für die Übertragung von Funksignalen an einen Basisstations-Transceiver (200) betreibt, umfassend, in dem mobilen Transceiver (100),
Ermitteln (32) einer gewünschten Übertragungskonfiguration für die mehrfachen Antennen auf der Basis des Zustands des mobilen Transceivers, wobei die gewünschte Übertragungskonfiguration auf Einzelantennenübertragung oder Mehrfachantennenübertragung basiert,
Ermitteln (33) von Informationen über einen potenziellen Statuswechsel des mobilen Transceivers (100) bei Verwendung der gewünschten Übertragungskonfiguration anstatt einer aktuellen Übertragungskonfiguration für die mehrfachen Antennen; und
Übertragen (34) der Informationen über eine Anforderung der gewünschten Übertragungskonfiguration und der Informationen über den potenziellen Statuswechsel an den Basisstations-Transceiver (200).

14. Verfahren für einen Basisstations-Transceiver (200) in einem mobilen Kommunikationssystem, wobei das mobile Kommunikationssystem weiterhin einen mobilen Transceiver (100) umfasst, welcher mehrfache Antennen für die Übertragung von Funksignalen an einen Basisstations-Transceiver (200) betreibt, umfassend, in dem Basisstations-Transceiver (200),
Empfangen (42) von Informationen über eine gewünschte Übertragungskonfiguration, wobei die gewünschte Übertragungskonfiguration auf Einzelantennenübertragung oder Mehrfachantennenübertragung basiert, und Informationen über einen potenziellen Statuswechsel des mobilen Transceivers (100) von dem mobilen Transceiver (100);
Ermitteln (44) eines potenziellen Lastzustands des Basisstations-Transceivers (200) auf der Basis der Informationen über die gewünschte Übertragungskonfiguration und der Informationen über den potenziellen Statuswechsel des mobilen Transceivers (100); und
Übertragen (46) der Informationen über eine angewiesene Übertragungskonfiguration auf der Basis des besagten ermittelten potenziellen Lastzustands an den mobilen Transceiver (100).

15. Computerprogramm mit einem Programmcode zum Durchführen eines der Verfahrens gemäß Anspruch 13 oder 14, wenn das Computerprogramm auf einem Computer oder Prozessor ausgeführt wird.

**Revendications**

1. Appareil (10) pour un émetteur/récepteur mobile (100) dans un système de communication mobile, l'émetteur/récepteur mobile (100) faisant fonctionner de multiples antennes pour transmettre des signaux radio à un émetteur/récepteur de station de base (200), l'appareil (10) comprenant
moyens pour déterminer (12) une configuration de transmission souhaitée pour les multiples antennes sur la base d'un état de l'émetteur/récepteur mobile (100), la configuration de transmission souhaitée étant basée sur une transmission à antenne unique ou une transmission à antennes multiples, les moyens pour déterminer (12) étant en outre adaptés pour déterminer des informations sur un changement d'état potentiel de l'émetteur/récepteur mobile (100) si la configuration de transmission souhaitée a été utilisée à la place d'une configuration de transmission actuelle pour les multiples antennes ; et
moyens pour transmettre (14) des informations sur une demande de la configuration de transmission souhaitée et les informations sur le changement d'état potentiel à l'émetteur/récepteur de station de base (200).

2. Appareil (10) selon la revendication 1, comprenant en outre des moyens pour recevoir (16) des informations sur une configuration de transmission ordonnée à partir de l'émetteur/récepteur de station de base (200), la configuration de transmission ordonnée comprenant des informations sur la configuration de transmission actuelle ou sur la configuration de transmission souhaitée, et des moyens pour commander (18) la transmission sur les multiples antennes sur la base des informations sur la configuration de transmission ordonnée et/ou dans lequel la configuration de transmission souhaitée correspond à une configuration de transmission à antenne unique et la configuration de transmission actuelle correspond à une configuration de transmission à antennes multiples et/ou dans lequel la configuration à antennes multiples correspond à une configuration de diversité de transmission en boucle fermée, dans lequel l'état de l'émetteur/récepteur mobile (100) correspond à un état de batterie de l'émetteur/récepteur mobile (100) et/ou dans lequel les informations sur le changement d'état potentiel indiquent une réduction de la puissance d'émission ou une réduction de la consommation de puissance de l'émetteur/récepteur mobile (100) si la configuration de transmission souhaitée a été utilisée à la place de la configuration de transmission actuelle.

3. Appareil (10) selon la revendication 1, dans lequel les informations sur le changement d'état potentiel comprennent des informations sur un rapport entre une puissance d'émission moyenne par unité de données lorsque la configuration de transmission actuelle est utilisée et une puissance d'émission moyenne par unité de données si la configuration de transmission souhaitée a été utilisée, ou dans lequel les informations sur le changement d'état potentiel comprennent des informations sur un rapport entre une consommation de puissance moyenne de l'émetteur/récepteur mobile (100) par unité de données lorsque la configuration de transmission actuelle est utilisée et une consommation de puissance moyenne de l'émetteur/récepteur mobile (100) par unité de données si la configuration de transmission souhaitée a été utilisée.

4. Appareil (10) selon la revendication 1, dans lequel les informations sur le changement d'état potentiel comprennent des informations sur un rapport entre un débit de données pouvant être atteint à un niveau de puissance d'émission actuel lorsque la configuration de transmission actuelle est utilisée et un débit de données pouvant être atteint potentiel au niveau de puissance d'émission actuel si la configuration de transmission souhaitée a été utilisée, des informations sur une quantité restante de durée de vie de batterie lorsque la configuration de transmission actuelle est utilisée et si la configuration de transmission souhaitée a été utilisée, des informations sur un rapport entre une quantité restante de durée de vie de batterie lorsque la configuration de transmission actuelle est utilisée et si la configuration de transmission souhaitée a été utilisé, des informations sur une marge de puissance de l'émetteur/récepteur mobile (100) lorsque la configuration de transmission actuelle est utilisée et si la configuration de transmission souhaitée a été utilisé, et/ou des informations sur un rapport des marges de puissance.

5. Appareil (10) selon la revendication 2, dans lequel les moyens pour recevoir (16) sont en outre adaptés pour recevoir des informations sur un temps de suspension et dans lequel les moyens pour transmettre (14) les informations sur la demande de la configuration de transmission souhaitée sont adaptés pour suspendre la transmission d'informations sur une demande d'une configuration de transmission souhaitée pendant le temps de suspension après avoir transmis les informations sur la demande.

6. Appareil (20) pour un émetteur/récepteur de station de base (200) dans un système de communication mobile, le système de communication mobile comprenant en outre un émetteur/récepteur mobile (100) faisant fonctionner de multiples antennes pour transmettre des signaux radio à l'émetteur/récepteur de station de base (200), ledit appareil (20) comprenant
   moyens pour recevoir (22) des informations sur une configuration de transmission souhaitée, la configuration de transmission souhaitée étant basée sur une transmission à antenne unique ou une transmission à antennes multiples, et des informations sur un changement d'état potentiel de l'émetteur/récepteur mobile (100) à partir de l'émetteur/récepteur mobile (100) ;
   moyens pour déterminer (24) un état de charge potentiel de l'émetteur/récepteur de station de base (200) sur la base des informations sur la configuration de transmission souhaitée et des informations sur le changement d'état potentiel de l'émetteur/récepteur mobile (100) ; et
   moyens pour transmettre (26) des informations sur une configuration de transmission ordonnée sur la base dudit état de charge potentiel déterminé à l'émetteur/récepteur mobile (100).

7. Appareil (20) selon la revendication 6, dans lequel l'état de charge potentiel de l'émetteur/récepteur de station de base (200) correspond à un rapport entre la puissance de réception globale potentielle et la puissance thermique et dans lequel le seuil de charge correspond à un seuil de charge maximum prédéterminé et/ou dans lequel les informations sur la configuration de transmission ordonnée indiquent la configuration de transmission souhaitée si l'état de charge potentiel de l'émetteur/récepteur de station de base (200) reste inférieur à un seuil de charge si l'émetteur/récepteur mobile (100) a utilisé la configuration de transmission souhaitée à la place d'une configuration de transmission actuelle et/ou dans lequel les moyens pour transmettre (26) sont en outre adaptés pour transmettre des informations sur un temps de suspension indiquant à l'émetteur/récepteur mobile (100) que la transmission d'informations sur une demande de la configuration de transmission souhaitée est suspendue pendant le temps de suspension après avoir transmis les informations sur la demande.

8. Appareil (20) selon la revendication 6, dans lequel le seuil de charge correspond à un seuil de charge maximum prédéterminé et dans lequel les moyens pour transmettre (26) les informations sur la configuration de transmission ordonnée à l'émetteur/récepteur mobile (100) transmettent les informations sur la configuration de transmission ordonnée indiquant la configuration de transmission souhaitée si l'état de charge potentiel de l'émetteur/récepteur de station de base (200) augmente de moins d'un seuil d'augmentation prédéterminé, si l'émetteur/récepteur mobile (100) a utilisé la configuration de transmission souhaitée à la place d'une configuration de transmission actuelle, ou dans lequel le seuil de charge correspond à un seuil de charge maximum prédéterminé et dans lequel les moyens pour transmettre (26) les informations sur la configuration de transmission ordonnée à l'émetteur/récepteur mobile (100) transmettent les informations sur la configuration de transmission ordonnée indiquant la configuration de transmission souhaitée si l'état de charge potentiel de l'émetteur/récepteur de station de base (200) augmente de plus du seuil d'augmentation si l'émetteur/récepteur mobile (100) a utilisé la configuration de transmission souhaitée à la place d'une configuration de transmission actuelle, et lorsque les informations sur le changement d'état potentiel de l'émetteur/récepteur mobile (100) indiquent une économie de durée de vie de la batterie de l'émetteur/récepteur mobile (100) de plus d'un seuil d'économie de batterie prédéterminé.

9. Appareil (20) selon la revendication 6, dans lequel la configuration de transmission souhaitée correspond à une configuration de transmission à antenne unique et la configuration de transmission actuelle correspond à une configuration de transmission à antennes multiples et/ou dans lequel la configuration à antennes multiples correspond à une configuration de diversité de transmission en boucle fermée, dans lequel les informations de changement d'état potentiel indiquent une réduction de la puissance d'émission ou une réduction de la consommation de puissance de l'émetteur/récepteur mobile (100) si la configuration de transmission souhaitée a été utilisée à la place de la configuration de transmission actuelle.

10. Appareil (20) selon la revendication 6, dans lequel les informations de changement d'état potentiel comprennent des informations sur un rapport entre une puissance d'émission moyenne par unité de données lorsque la configuration de transmission actuelle est utilisée et une puissance d'émission moyenne par unité de données si la configuration de transmission souhaitée a été utilisée, ou dans lequel les informations de changement d'état potentiel comprennent des informations sur un rapport entre une consommation de puissance moyenne de l'émetteur/récepteur mobile (100) par unité de données lorsque la configuration de transmission actuelle est utilisée et une consommation de puissance moyenne de l'émetteur/récepteur mobile (100) par unité de données si la configuration de transmission souhaitée a été utilisée.

11. Appareil (20) selon la revendication 6, dans lequel les informations de changement d'état potentiel comprennent des informations sur un rapport entre un débit de données pouvant être atteint à un niveau de puissance d'émission actuel de l'émetteur/récepteur mobile (100) lorsque la configuration de transmission actuelle est utilisée et un débit de données pouvant être atteint au niveau de puissance d'émission actuel si la configuration de transmission souhaitée a été utilisée, des informations sur une quantité restante de durée de vie de batterie lorsque la configuration de transmission actuelle est utilisée et si la configuration de transmission souhaitée a été utilisée, des informations sur un rapport entre une quantité restante de durée de vie de batterie lorsque la configuration de transmission actuelle est utilisée et si la configuration de transmission souhaitée a été utilisée, des informations sur une marge de puissance de l'émetteur/récepteur mobile (100) lorsque la configuration de transmission actuelle est utilisée et si la configuration de transmission souhaitée a été utilisée, et/ou des informations sur un rapport des marges de puissance.

12. Système de communication mobile comprenant un émetteur/récepteur mobile (100) avec un appareil (10) selon la revendication 1 et un émetteur/récepteur de station de base (200) avec un appareil (20) selon la revendication 6.

13. Procédé pour un émetteur/récepteur mobile (100) dans un système de communication mobile, l'émetteur/récepteur mobile (100) faisant fonctionner de multiples antennes pour transmettre des signaux radio à un émetteur/récepteur de station de base (200) comprenant, dans l'émetteur/récepteur mobile (100), les étapes suivantes
déterminer (32) une configuration de transmission souhaitée pour les multiples antennes sur la base d'un état de l'émetteur/récepteur mobile, la configuration de transmission souhaitée étant basée sur une transmission à antenne unique ou une transmission à antennes multiples ;
déterminer (33) des informations sur un changement d'état potentiel de l'émetteur/récepteur mobile (100) lorsque la configuration de transmission souhaitée est utilisée à la place d'une configuration de transmission actuelle pour les multiples antennes ; et
transmettre (34) des informations sur une demande de la configuration de transmission souhaitée et les informations sur le changement d'état potentiel à l'émetteur/récepteur de station de base (200).

14. Procédé pour un émetteur/récepteur de station de base (200) dans un système de communication mobile, le système de communication mobile comprenant en outre un émetteur/récepteur mobile (100) faisant fonctionner de multiples antennes pour transmettre des signaux radio à un émetteur/récepteur de station de base (200) comprenant, dans l'émetteur/récepteur de station de base (200), les étapes suivantes
recevoir (42) des informations sur une configuration de transmission souhaitée, la configuration de transmission souhaitée étant basée sur une transmission à antenne unique ou une transmission à antennes multiples, et des informations sur un changement d'état potentiel de l'émetteur/récepteur mobile (100) à partir de l'émetteur/récepteur mobile (100) ;

déterminer (44) un état de charge potentiel de l'émetteur/récepteur de station de base (200) sur la base des informations sur la configuration de transmission souhaitée et des informations sur le changement d'état potentiel de l'émetteur/récepteur mobile (100) ; et

transmettre (46) des informations sur une configuration de transmission ordonnée sur la base dudit état de charge potentiel déterminé à l'émetteur/récepteur mobile (100).

15. Programme informatique possédant un code de programme pour exécuter un des procédés selon la revendication 13 ou 14, lorsque le programme informatique est exécuté sur un ordinateur ou un processeur.

# Fig. 1

Fig. 2

100c

100a

200

100b

205

Fig. 3

```
┌──────────────────┐
│   Determining    │  ⌇ 32
└──────────────────┘
         │
         ▼
┌──────────────────┐
│   Determining    │  ⌇ 33
└──────────────────┘
         │
         ▼
┌──────────────────┐
│   Transmitting   │  ⌇ 34
└──────────────────┘
         │
         ▼
┌──────────────────┐
│    Receiving     │  ⌇ 36
└──────────────────┘
         │
         ▼
┌──────────────────┐
│   Controlling    │  ⌇ 38
└──────────────────┘
```

# Fig. 4

Fig. 5

**EP 2 575 266 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2008133576 A1